Europäisches Patentamt

European Patent Office

Office européen des brevets

(11) Veröffentlichungsnummer: **0 517 099 A1**

# EUROPÄISCHE PATENTANMELDUNG

(21) Anmeldenummer: **92108998.3**

(22) Anmeldetag: **28.05.92**

(51) Int. Cl.5: **G11B 27/36**, G11B 20/18, G11B 27/34, G11B 7/00

(30) Priorität: **07.06.91 DE 4118672**
**25.06.91 DE 4120870**
**28.03.92 DE 4210264**

(43) Veröffentlichungstag der Anmeldung:
**09.12.92 Patentblatt 92/50**

(84) Benannte Vertragsstaaten:
**PT**

(71) Anmelder: **DEUTSCHE THOMSON-BRANDT GMBH**

**W-7730 Villingen-Schwenningen(DE)**

(72) Erfinder: **Kühn, Hans-Robert**
**Haydnweg 9**
**W-7742 St. Georgen(DE)**
Erfinder: **Rutschmann, Richard**
**Bergstrasse 17**
**W-7896 Wutöschingen(DE)**
Erfinder: **Läufer, Engelbert**
**Ginsterweg 40**
**W-7742 St. Georgen(DE)**

(54) **Fehlerartsignalisation optischer Informationsträger.**

(57) Die Erfindung betrifft ein Verfahren und eine Anordnung zur Fehlerartsignalisation optischer Informationsträger, beispielsweise optischer Platten mit einem Abspielgerät (1). Es wird das Beurteilen der Wiedergabequalität optischer Informationsträger erleichtert, indem mindestens eine Fehlerursache, wie beispielsweise die Fehlerursache Fingerabdruck, ermittelt und angezeigt wird. Am Abspielgerät (1) ist eine Verarbeitungsschaltung (3) angeschlossen, die mit einer die Fehlerursache darstellenden Anzeigevorrichtung (4) verbunden ist. Dem Verbraucher wird Aufschluß über die Wiedergabequalität der optischen Platte gegeben und er kann gegebenenfalls durch einfaches Abwischen ihre ursprüngliche Wiedergabequalität wieder herstellen. Die Erfindung schafft die Möglichkeit, elektronisch zwischen Fingerabdrücken und anderen negativen Einwirkungen zu unterscheiden.

Fig.1

EP 0 517 099 A1

Die Erfindung betrifft ein Verfahren und eine Anordnung zur Fehlerartsignalisation optischer Informationsträger mit einem Wiedergabegerät im Sinne einer „Fuzzy Logic", die nicht nur das Vorhandensein eines Fehlers, sondern die Art des Fehlers, wie zum Beispiel Fingerabdrücke auf einer Compact Disc, signalisiert und es dadurch dem Verbraucher gegebenenfalls ermöglicht, die ursprüngliche Wiedergabequalität des optischen Informationsträgers wieder herzustellen. Das Gebiet, dem die Erfindung zuzuordnen ist, betrifft das Signalisieren mindestens einer Fehlerart optischer Informationsträger, wie sie bei fahrlässigem Umgang mit der Compact Disc (CD), Laserdisc oder ähnlichen Informationsträgern auftreten, wobei das üblicherweise zur Wiedergabe der Information vorgesehene Abspielgerät verwendet wird.

Trotz größter Sorgfalt weisen zur Aufzeichnung und Wiedergabe von Audio- und/oder Videosignalen oder Datensignalen verwendete optische Informationsträger sowohl herstellungs- als auch umweltbedingte Fehler auf, die in gewissem Umfang mit einer Fehlerkorrektureinrichtung von den Abspielgeräten korrigiert bzw. interpoliert werden. Ohne diese Fähigkeit wären die Compact Disc oder Laserdisc nicht realisierbar, da dann keines der vielen Bits verlorengehen beziehungsweise keiner der unzähligen Pits in der Scheibe verschmiert oder verdeckt werden dürfte. Fehler des optischen Informationsträgers können jedoch zumindest die Originalität der Wiedergabe beeinflussen oder führen zu Ausfällen bei der Wiedergabe. Es treten sowohl zufällige Einzelfehler, wie Luftbläschen oder Verschmutzungen in der Schutzschicht des optischen Informationsträgers, als auch sogenannte Flächenfehler, also Kratzer und Fingerabdrücke auf, die sehr viele Informationen zerstören oder verdecken, so daß der Verbraucher nicht mehr unterscheiden kann, ob ursprüngliche oder berechnete beziehungsweise interpolierte Informationen wiedergegeben werden.

Zur Anzeige der technischen Qualität einer gerade gespielten CD ist ein Fehleranzeigegerät bekannt, das die Auslastung der Fehlerkorrektur anzeigt, vgl. KRIEG, Bernhard: Praxis der digitalen Audiotechnik: digitale Aufnahme und Wiedergabe, Franzis-Verlag GmbH, München 1989, S. 60 - 63. Die Auslastung der Fehlerkorrektur ist ein Spiegelbild des Fehlergrades des optischen Informationsträgers, den der im Abspielgerät vorhandene Program-Counter signalisiert. Der Fehlergrad repräsentiert sowohl die Häufigkeit als auch die Anzahl der Fehler. Obwohl er ein direktes Indiz für die technische Qualität einer gerade gespielten CD ist, erhält der Verbraucher keinen Aufschluß über gegebenenfalls notwendige Maßnahmen zum Verringern des Fehlergrades, da zwar die Häufigkeit und Anzahl der Fehler, jedoch nicht die Art des Fehlers signalisiert wird.

Die Fehlerartsignalisierung erfordert somit ein in der Komplexität über den Fehlergrad hinausgehendes System. Es ist allgemein bekannt, derartige Systeme die den Menschen als Entscheidungsträger gewichteter komplexer Probleme unterstützen, als „Fuzzy Logic" zu bezeichnen.

Es ist weiterhin bekannt, daß bei der CD-Herstellung LaserScanner zur optischen Inspektion der Informationsträger verwendet werden, die einen hohen Aufwand erfordern und mit denen im Rahmen einer Gütekontrolle mit einem automatischen Prüfsystem eine Gut/Schlecht-Sortierung der CDs erfolgt, vgl. „Wenn es klickt, nicht gleich den Spieler schelten", in: Frankfurter Allgemeine Zeitung vom 07.01.1992. Als Prüfkriterium dient ebenfalls der Fehlergrad, der die Anzahl der Störereignisse auf der Platte repräsentiert. Ein derartig aufwendiges System zur Fehlersignalisierung des optischen Informationsträgers in Form eines Zusatzgerätes ist dem Verbraucher jedoch nicht zuzumuten. Es sei erwähnt, daß mit diesen Einrichtungen auch keine Unterscheidung zwischen den unterschiedlichen Fehlerarten erfolgen kann.

Der Erfindung liegt deshalb die Aufgabe zugrunde, ein Verfahren und eine Anordnung zu schaffen, die mit geringem Aufwand das Signalisieren mindestens einer Fehlerart eines optischen Aufzeichnungsträgers, wie beispielsweise Fingerabdrücke, mit einem Wiedergabegerät ermöglicht, so daß dem Verbraucher mit dem Beratungs- beziehungsweise Signalisiersystem das Beurteilen der Qualität des optischen Aufzeichnungsträgers erleichtert und ein Hinweis zum Erreichen einer besseren Wiedergabequalität beim Vorliegen der Fehlerursache Fingerabdruck gegeben wird.

Die gestellte Aufgabe wird erfindungsgemäß dadurch gelöst, daß in einem ersten Verfahrensschritt mindestens eine Fehlerursache beziehungsweise Fehlerart ermittelt und in einem zweiten Verfahrensschritt signalisiert beziehungsweise angezeigt wird.

Sofern der gerade abgespielte optische Informationsträger einen Fehler aufweist, wird explizit mindestens eine Fehlerursache angezeigt, so daß der Verbraucher im Fall der Fehlerursache Fingerabdruck durch einfaches Abwischen der Fingerabdrücke, vorzugsweise geradlinig von der Mitte zum Rand, die ursprüngliche Wiedergabequalität wieder herstellen kann.

Ausgangspunkt des Verfahrens bildet der optische Informationsträger, der insbesondere durch mehrfache und fahrlässige Handhabung zunehmend Fehler aufweist und mit einem üblicher weise zur Wiedergabe der Informationen verwendeten Abspielgerät optisch abgetastet wird.

Aufgrund der örtlichen Charakteristik, die die Fehlerursachen aufweisen, wird zum Ermitteln der Fehlerursache aus dem Fehlergrad eine den Fehlergrad einer optischen Platte repräsentierende Anzahl fehlerhafter Frames, die vom Decoder nicht mehr korrigiert wird, in Beziehung zum Fehlerort gesetzt, wobei der Fehlerort aus der Anzahl der Subcodeblöcke zwischen entsprechend der Fehlerrate bewerteten Fehlerpaketen ermittelt werden kann. Die Fehlerursache wird dadurch mit einer in benachbarten Spuren eines Plattensektors auftretenden Fehlerrate bestimmt.

Vorzugsweise wird die reparable Fehlerursache Finderabdruck beim Auftreten von mehr als drei Fehlerpaketen in fünf benachbarten Spuren angezeigt. Andererseits werden Kratzer und sogenannte Black- Dots vorzugsweise beim Auftreten von bis zu drei Fehlerpaketen in drei benachbarten Spuren identifiziert beziehungsweise als Fehlerursache ermittelt und signalisiert.

Andererseits kann zum Ermitteln mindestens einer Fehlerursache das vom optischen Informationsträger mit dem Abspielgerät detektierte Hochfrequenzsignal verwendet werden. Vom Hochfrequenzsignal wird hierzu ein Meßsignal abgeleitet, dessen Auftreten innerhalb eines oberen und eines unteren Schwellwertes über einen die Fehlerursache kennzeichnenden Zeitbereich festgestellt wird. Als Schwellwerte zum Ermitteln der Fehlerursache werden vorzugsweise 10 und 90 % des Hochfrequenzsignals verwendet, wobei die Schwellwerte auf obere und untere Spitzenwerte des Hochfrequenzsignals bezogen werden, um insbesondere Toleranzen der Abtaster und der Reflexionseigenschaften unterschiedlicher optischer Informationsträger auszugleichen. Damit das Meßsignal hinsichtlich ebenfalls vom Hochfrequenzsignal abgeleiteter Schwellwerte ausgewertet werden kann, werden Schwellwerte mit einer gegenüber dem Meßsignal wesentlich größeren Zeitkonstanten verwendet.

Zum Abspielen des optischen Informationsträgers mit erhöhter Geschwindigkeit, wie beispielsweise dem Überspielen der optischen Platte auf ein Band mit dem sogenannten high speed dubbing oder für einen Suchvorgang nach Fehlerursachen mit wesentlich verkürzter Abspielzeit ist es vorteilhaft, Schwellwerte mit einer geringeren Zeitkonstanten zu verwenden, da Beeinträchtigungen anderenfalls erst beim Abspielen mit normaler Abspielgeschwindigkeit festgestellt werden.

Der Zeitbereich, der die Fehlerursache Fingerabdruck kennzeichnet, ist vorzugsweise eine Zeitdauer ab 4 ms, in der das vom Hochfrequenzsignal abgeleitete Meßsignal innerhalb der Schwellwerte auftritt. Durch Änderung der Schwellwerte, der Zeitkonstanten der Schwellwerte und des Zeitbereiches können neben der Fehlerursache Fingerabdruck auch andere Fehlerursachen ermittelt werden. Darüber hinaus ist es sowohl mit der vom Fehlergrad als auch mit der vom Hochfrequenzsignal ausgehenden Lösung durch Variieren der Parameter und gegebenenfalls Kombination der Lösungen möglich, unterschiedliche Fehlerursachen zu ermittelt und eine Wichtung des Grades der Fehlerursache oder Fehlerursachen vorzunehmen. Dem Verbraucher wird beispielsweise signalisiert, ob es sich um leichte Fingerabdrücke, starke Fingerabdrücke oder um eine hörbar durch Fingerabdrücke oder eine andere Fehlerursache gestörte Wiedergabe handelt.

Um den Grad der Sicherheit der Identifikation von Fingerabdrücken gegenüber anderen Störungen zu erhöhen, wird das Fehler repräsentierende Signal vorzugsweise mit einem dem Plattenumlauf äquivalenten Signal verknüpft. Dadurch wird vermieden, daß sich mehrere kurze Störungen, die nicht von Fingerabdrücken herrühren, zu einem dem Signal Fingerabdruck entsprechenden Signal addieren. Das dem Plattenumlauf äquivalente Signal ist vorzugsweise das Ausgangssignal des sogenannten Radial-Detektors. Weiterhin ist es vorteilhaft den Vorgang der Summierung einer festgelegten Anzahl von Track-Absolvierungen zum Detektieren der radialen Ausdehnung von Fingerabdrücken nicht bereits abzubrechen, wenn im Rahmen der Zählung ein einzelner Track-Umlauf frei von Störsignalen ist.

Das Anzeigen einer Fehlerursache oder mehrerer Fehlerursachen erfolgt visuell und/oder akustisch. Um zu gewährleisten, daß der Bedienende die Fehleranzeige wahrnimmt, wird die Fehlerursache auch über den Zeitraum ihres Auftretens hinausgehend signalisiert.

Zur Durchführung des Verfahrens ist eine Anordnung vorgesehen, die aus einer Verarbeitungsschaltung zur Verarbeitung Fehler eines optischen Informationsträgers repräsentierender Signale des Abspielgerätes und zur Zuführung zu einer Anzeigevorrichtung für mindestens eine Fehlerursache besteht.

Eine Verarbeitungsschaltung, die der Verarbeitung den Fehlergrad eines optischen Informationsträgers repräsentierender Signale dient, wird vorzugsweise am Decoder bzw. Program-Error-Counter des Abspielgerätes angeschlossen und von einer fehlerhafte Frame in Beziehung zum Fehlerort setzenden Recheneinheit gebildet.

Eine Verarbeitungsschaltung, die der Verarbeitung von der optischen Platte mit dem Abspielgerät detektierter Hochfrequenzsignale dient, wird vorzugsweise am Abtaster des Abspielgerätes angeschlossen und besteht aus einer einen oberen Schwellwert und einen unteren Schwellwert des Hochfrequenzsignals bereitstellenden Schwellwertschaltung, mit der ein aus dem Hochfrequenzsignal abgeleitetes Meßsignal innerhalb der Schwellwerte erfaßt wird und aus einem Zeitglied, mit dem die Zeitdauer beziehungsweise die Aufenthaltsdauer des Meßsignals innerhalb der Schwellwerte festgestellt wird.

Die Schwellwertschaltung besteht vorzugsweise aus zwei entgegengesetzt gerichteten ersten Spitzenwertgleichrichtern, die über einen Spannungsteiler miteinander verbunden sind, an dem zwei Komparatoren angeschlossen sind, die eingangsseitig mit einem das Meßsignal bereitstellenden zweiten Spitzengleichrichter und ausgangsseitig mit dem Eingang eines Gatters verbunden sind.

Die Spitzenwertgleichrichter bestehen jeweils aus einer Diode, einem Kondensator und einer Konstantstromquelle oder mindestens einem Widerstand in Verbindung mit einer Diode und einem Kondensator. Die ersten Spitzenwertgleichrichter weisen dabei eine im Vergleich zum zweiten Spitzenwertgleichrichter wesentlich größere Zeitkonstante auf, um Schwellwerte für das vom Hochfrequenzsignal abgeleitete Meßsignal bereitzustellen. Die Zeitkonstante der ersten Spitzenwertgleichrichter beträgt vorzugsweise 200 ms, während die Zeitkonstante des zweiten Spitzenwertgleichrichters einen Wert im Bereich von 2 ms aufweist. Als Schwellwerte, die mit dem die Spitzenwertgleichrichter verbindenden Spannungsteiler gebildet werden, werden vorzugsweise 10 % und 90 % des Hochfrequenzsignals verwendet und Komparatoren als Vergleichswert zugeführt. Diesen Komparatoren wird ebenfalls das vom Hochfrequenzsignal abgeleitete Meßsignal zugeführt, so daß aufgrund der unterschiedlichen Zeitkonstanten ein Auftreten des Meßsignals innerhalb der Schwellwerte ermittelt und durch die Verknüpfung der Ausgänge der Komparatoren über ein Gatter signalisiert wird.

Da Fingerabdrücke im Gegensatz zu den sogenannten Black-Dots sich im Hochfrequenzsignal nicht als vollständige Einbrüche der Spannung des Hochfrequenzsignals widerspiegeln, wird bereits dadurch eine Unterscheidung zwischen diesen Fehlerursachen möglich.

Da ein optischer Informationsträger jedoch auch Kratzer aufweisen kann, die sich im Hochfrequenzsignal analog zur Fehlerursache Fingerabdruck als Meßsignal innerhalb der Schwellwerte widerspiegeln, ist eine weitergehende Auswertung des Meßsignals erforderlich. Hierzu ist ein am Gatter angeschlossenes Zeitglied vorgesehen, mit dem die Zeitdauer des Auftretens des Meßsignals innerhalb der Schwellwerte festgestellt und bewertet wird. Da die örtliche Ausdehnung von Fingerabdrücken größer als die von Kratzern ist, wird die Zeitdauer der Dämpfung oder von Einbrüchen des Hochfrequenzbeziehungsweise Meßsignals als zusätzliches Kriterium zum Unterscheiden von Fehlerursachen verwendet. Als Zeitglied ist ein entsprechender Schaltkreis oder ein Integrator mit nachgeschaltetem Komparator geeignet, dessen Ausgang vorzugsweise beim Auftreten des Meßsignals innerhalb der Schwellwerte ab einer Zeitdauer von 4 ms ein Ausgangssignal bereitstellt, das zum Ermitteln der Fehlerursache Fingerabdruck verwendet wird.

Um sicherzustellen, daß die Fehleranzeige vom Betreiber des Abspielgerätes infolge der meist nur geringen Dauer des Auftretens von Fehlern auch wahrgenommen wird, ist dem Komparator ein Monoflop und/oder ein rückstellbarer Speicher nachgeschaltet. Dadurch wird eine über den Zeitraum des Auftretens einer Fehlerursache hinausgehende Anzeige erreicht. Weiterhin ist diese Art der Anzeige im Zusammenhang mit sogenannten Wechslern oder Magazinabspielgeräten vorteilhaft, da die Information über eine fehlerhafte optische Platte gegebenenfalls bis zum Einlegen eines neuen Magazins erfolgt, mit dem dann ein Rückstellen der Speicher vorgenommen wird.

Es ist weiterhin vorgesehen, die Spitzenwertgleichrichter auf andere Zeitkonstanten umschaltbar auszuführen, um die Wirksamkeit der Fehlerursachenanzeige auch beim Abspielen mit erhöhter Geschwindigkeit zu gewährleisten, wie es beispielsweise zum Überspielen mit dem sogenannten high speed dubbing erforderlich ist. Da bei dieser Art des Überspielens in der Regel nicht mitgehört wird, könnten anderenfalls Fehler erst beim Abspielen mit normaler Geschwindigkeit bemerkt werden. Eine derartige Zeitkonstantenumschaltung ist auch für einen sogenannten Suchvorgang erforderlich, bei dem die optische Platte mit wesentlich verkürzter Abspielzeit hinsichtlich des Auftretens von Fehlern untersucht wird.

Durch Verändern der Parameter der Anordnung können auch andere Fehlerursachen als die Fehlerursache Fingerabdruck ermittelt und eine Anpassung an den Informationsträger vorgenommen werden. Darüber hinaus ist die Anordnung geeignet, um eine Bewertung einer Fehlerursache hinsichtlich ihrer Intensität vorzunehmen.

Unabhängig vom Aufbau der Verarbeitungsschaltung, mit der mindestens eine Fehlerursache ermittelt wird, ist eine visuell und/oder akustisch signalisierende Anzeigevorrichtung vorgesehen, die aus einer oder mehreren Leuchtdioden, einem Display oder Anzeigefeldern oder einer ein oder mehrere Tonsignale erzeugenden Tonrufeinrichtung besteht. Mit der Anzeigevorrichtung werden vorzugsweise reparable Fehlerursachen oder auch reparable und/oder irreparable Fehlerursachen angezeigt.

Hinsichtlich der Gerätegestaltung werden die Anzeigevorrichtung und die Verarbeitungsschaltung zu einem Fehleranzeigegerät zusammengefügt, welches als separates Fehleranzeigegerät mit dem Abspielgerät verbunden ist oder das Fehleranzeigegerät ist im Abspielgerät integriert und bildet mit diesem eine bauliche Einheit.

Die Vorteile des Verfahrens und der Anordnung bestehen insbesondere darin, daß dem Betreiber des Abspielgerätes das Beurteilen der Wiedergabequalität eines optischen Informationsträgers erleichtert wird, hierzu im Abspielgerät vorhandene Einrichtungen und bereits realisierte Verfahrensschritte verwendet werden können und der Verbraucher eine explizite Information über gegebenenfalls vorhandene Fehlerursachen des gerade abgespielten optischen Informationsträgers erhält, die es ihm im Fall von Fingerabdrücken ermöglicht, durch einfaches Abwischen die ursprüngliche Wiedergabequalität des optischen Informationsträgers wieder herzustellen.

Das Verfahren und die Anordnung sind mit geringem Aufwand realisierbar und der Verbraucher erhält Aufschlüsse darüber, ob ursprüngliche oder wesentlich mit einem Korrektursystem berechnete beziehungsweise interpolierte Informationen wiedergegeben werden.

Im folgenden wird die Erfindung anhand von zwei Ausführungswege darstellenden Zeichnungen näher erläutert.

Es zeigen

Fig. 1    ein Blockschaltbild zur Durchführung des Verfahrens zur Fehlerartsignalisation optischer Informationsträger mit einem Abspielgerät 1,

Fig. 2    ein Flußdiagramm zum vom Fehlergrad ausgehenden Verfahren der Fehlerartanzeige,

Fig. 3    schematisch dargestellte Signalverläufe zum Verfahren und zur Anordnung zum vom Hochfrequenzsignal RF des Abspielgerätes 1 ausgehenden Signalisieren der Fehlerursache,

Fig. 4    eine Anordnung zur vom Hochfrequenzsignal RF ausgehenden Fehlerartanzeige,

Fig. 5    ein Blockschaltbild einer Anordnung zur vom Hochfrequenzsignal RF ausgehenden Fehlerartanzeige,

Fig. 6    ein Blockschaltbild einer Anordnung zur vom Fehlergrad ausgehenden Fehlerartanzeige.

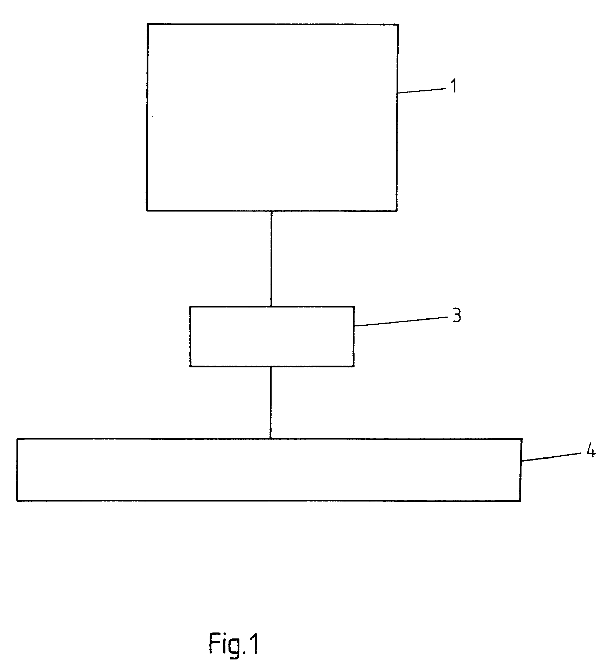

Fig. 1 entsprechend wird das Verfahren zur Fehlerartsignalisation optischer Informationsträger mit einem Abspielgerät 1, mit dem im ersten Verfahrensschritt mindestens eine Fehlerursache ermittelt und im zweiten Verfahrensschritt angezeigt wird, mit einer Verarbeitungsschaltung 3 und einer Anzeigevorrichtung 4 durchgeführt.

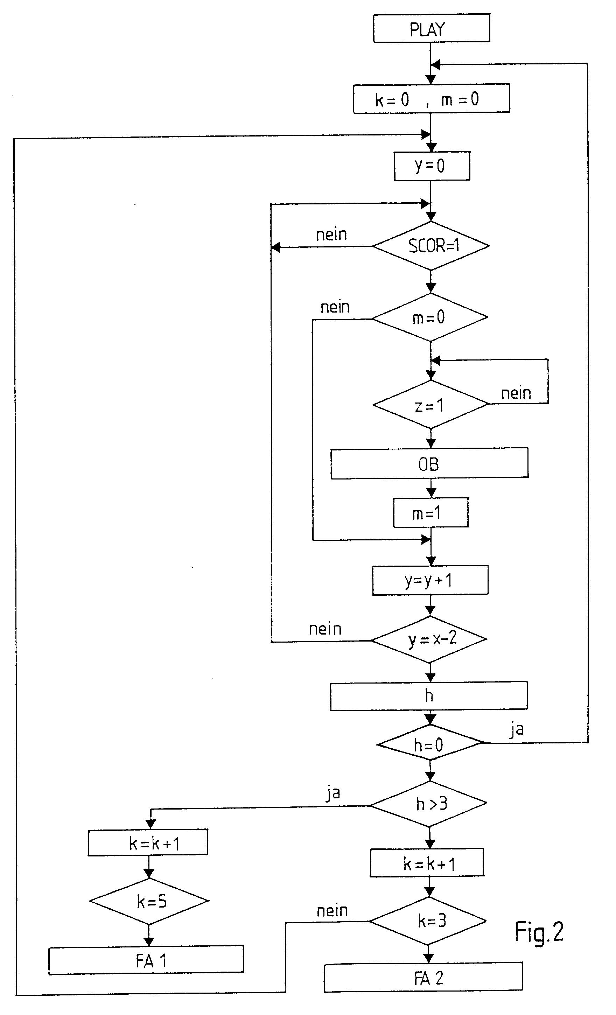

In einem ersten Ausführungsweg zur Fehlerartsignalisation einer Compact Disc besteht der erste Verfahrensschritt darin, daß aus dem Fehlergrad, den ein in Fig. 1 nicht dargestellter Decoder 2 des Abspielgerätes 1 bereitstellt, mindestens eine Fehlerursache ermittelt wird. Zum Ermitteln von Fehlerursachen aus dem Fehlergrad eines optischen Aufzeichnungsträgers werden Fig. 2 entsprechend mit dem Start des Abspielgerätes PLAY zunächst die Anzahl der hinsichtlich des Auftretens von Fehlern zu untersuchenden Spuren k sowie ein eine Fehlerrate z darstellendes Flag m Null gesetzt. Auch die Zahl der Subcodeblöcke y wird beim Start des Abspielgerätes PLAY gleich Null gesetzt. Mit dem Auftreten des ersten Subcode-Synchronsignals SCOR wird im Signalflußverlauf weitergeschaltet. Das die Fehlerrate z darstellende Flag m wird gesetzt, wenn erstmalig eine Interpolation auftritt, deren Vorliegen analog zur Fehlerrate z von den, den Fehlergrad der optischen Platte signalisierenden Einrichtungen des Abspielgerätes abgeleitet wird. Tritt eine Fehlerrate z = 1 auf, wird durch Berechnung der Zahl der Subcodeblöcke y je Umdrehung x eine Ortsbestimmung OB durchgeführt. Die Zahl der Subcodeblöcke y je Umdrehung x ergibt sich aus dem Abtastdurchmesser, der aus dem sogenannten Subcode ATIME berechnet wird, multipliziert mit der Zahl $\pi$, dividiert durch das Produkt aus Subcodeblockzeit und Abtastgeschwindigkeit. Die Abtastgeschwindigkeit ist in bekannter Weise für jede Platte nur einmal zu bestimmen und die Zahl der Subcodeblökke y je Umdrehung x wird vorzugsweise als ganze Zahl abgerundet. Weiterhin wird das die Fehlerrate z darstellende Flag m gleich Eins gesetzt und anschließend durch Erhöhen der Zahl der Subcodeblöcke y um Eins abgewartet, ob im gleichen Plattensektor erneut eine Fehlerrate z auftritt. Außerdem wird in einem folgenden Schritt die Ungenauigkeit von zwei Subcodeblöcken y berücksichtigt. Dem schließt sich eine Bewertung fehlerhafter Frame in Fehlerpaketen h an. Entsprechend experimenteller Ergebnisse wurde eine auf vier Frame innerhalb einer 96 Frame entsprechenden Subcodeblockzeit bezogene Größe der Fehlerpakete h gewählt, um in Kombination mit einer hinsichtlich des Auftretens von Fehlern zu untersuchenden Anzahl von Spuren k eine Unterscheidung zwischen den Fehlerursachen Fingerabdruck und Kratzer, Black-Dot zu ermöglichen. Es hat sich gezeigt, daß die reparable Fehlerursache Fingerabdruck als erste Fehlerart FA1 beim Auftreten von mehr als drei Fehlerpaketen h in fünf benachbarten Spuren k vorliegt. Andererseits werden Kratzer und Black-Dots als zweite Fehlerart FA2 beim Auftreten von bis zu drei Fehlerpaketen h in drei benachbarten Spuren k identifiziert.

Um den Grad der Sicherheit der Identifikation von Fingerabdrücken gegenüber anderen Störungen zu erhöhen, wird das Fehler repräsentierende Signal mit einem dem Plattenumlauf äquaivalenten Signal verknüpft. Dadurch wird vermieden, daß sich mehrere kurze Störungen, die nicht von Fingerabdrücken herrühren, zu einem Fingerabdruck entsprechenden Signal addieren. Als einem Plattenumlauf äquivalentes Signal wird vorzugsweise das Ausgangssignal des sogenannten Radial-Detektors verwendet. Anderseits ist es vorteilhaft, den Vorgang der Summierung einer festgelegten Anzahl von Track-Absolvierungen entsprechend der Plattenumläufe zum Detektieren der radialen Ausdehnung von Fingerabdrücken nicht bereits abzubrechen, wenn im Rahmen der Zählung ein einzelner Track-Umlauf frei von Störsignalen ist.

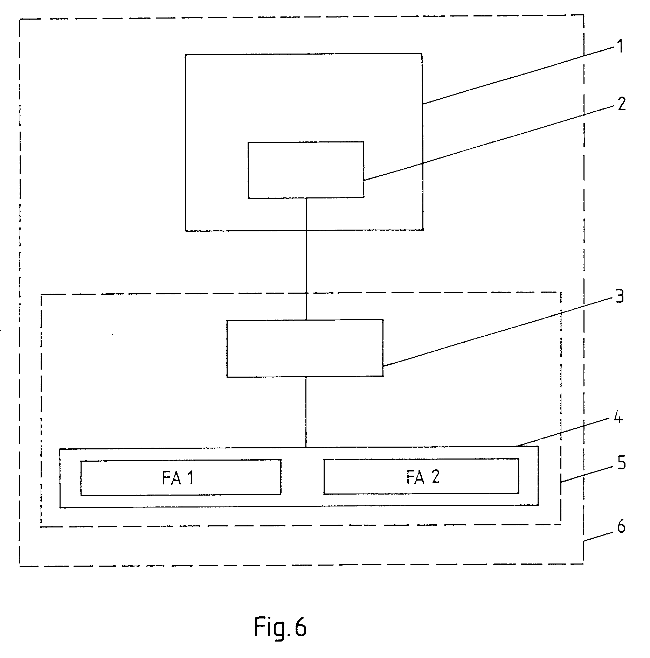

Eine diesem Ausführungsweg entsprechende Anordnung ist in Fig. 6 dargestellt. Sie besteht als dem Abspielgerät 1, das einen den Fehlergrad der optischen Platte signalisierenden Decoder 2 enthält, einer Verarbeitungsschaltung 3 und einer Anzeigevorrichtung 4. Am Decoder 2 ist die Verarbeitungsschaltung 3 angeschlossen, mit der die den Fehlergrad der gerade gespielten optischen Platte repräsentierenden Signale verarbeitet werden. Sie ist eine Recheneinheit, mit der fehlerhafte Frame im Beziehung zum Fehlerort gesetzt werden. Im Ergebnis der Berechnung wird eine der gegebenenfalls vorliegenden Fehlerursachen Fingerabdruck oder Kratzer, Black-Dot ermittelt und ein diesbezügliches Signal zu der an der Verarbeitungsschaltung 3 angeschlossenen Anzeigevorrichtung 4 weitergeleitet, die die entsprechende Fehlerursache mittels Display als erste Fehlerart FA1 beziehungsweise zweite Fehlerart FA2 signalisiert.

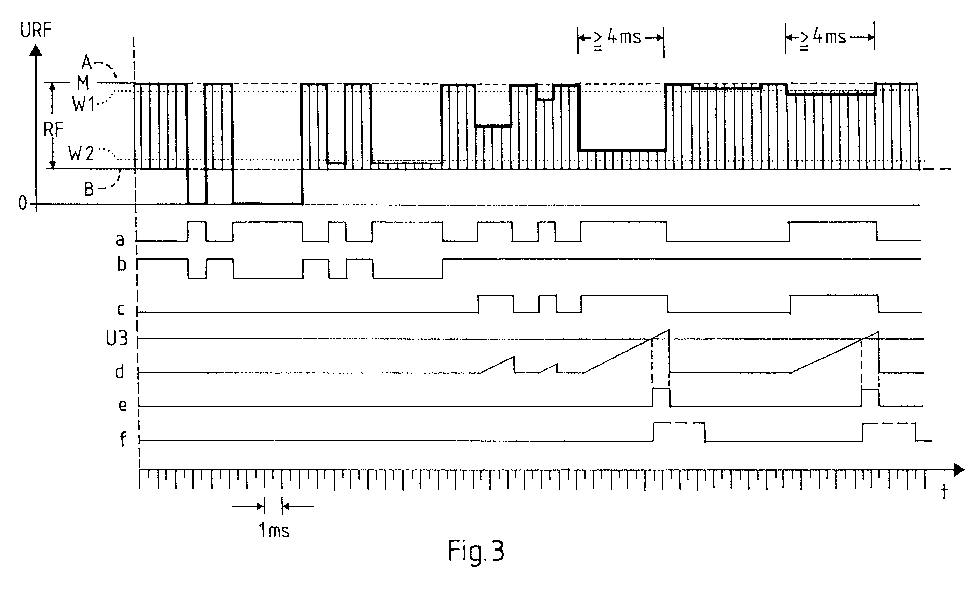

In einem zweiten Ausführungsweg besteht der erste Verfahrensschritt darin, daß aus dem von der optischen Platte mit dem Abspielgerät 1 detektierten Hochfrequenzsignal RF mindestens die Fehlerursache Fingerabdruck ermittelt wird. Zur Erläuterung des Verfahrens ist in Fig. 3 ein Hochfrequenzsignal RE schematisch dargestellt, in welchem die wesentlichen Fehlerursachen angegeben sind. Es wurde herausgefunden, daß beim Vorliegen der Fehlerursache Black-Dot die Spannung URF des Hochfrequenzsignals RE erhebliche Einbrüche aufweist, die sich von Null bis annähernd 10 % des Hochfrequenzsignals RF erstrecken. Diese Einbrüche können, wie im Signalverlauf dargestellt, unterschiedliche Einbruchtiefen und Einbruchlängen aufweisen.

Die Fehlerursache Kratzer führt zu Einbrüchen der Spannung URF des Hochfrequenzsignals RF, die durch eine geringere Einbruchtiefe und überwiegend auch eine geringere Einbruchlänge gekennzeichnet sind.

Fingerabdrücke führen aufgrund ihrer Ausdehnung auf der optischen Platte zu Einbrüchen der Spannung URF des Hochfrequenzsignals RF mit einer Einbruchlänge beziehungsweise Zeitdauer ab 4 ms. Die Stärke des Fingerabdruckes entspricht dabei der Einbruchtiefe. Da sehr leichte Fingerabdrücke die Wiedergabequalität der optischen Platte nicht beeinflussen, können sie unberücksichtigt bleiben. Ausgehend von diesen gewonnenen Erkenntnissen wird aus dem Hochfrequenzsignal RF ein Meßsignal M abgeleitet und beim Auftreten des Meßsignals M innerhalb eines oberen Schwellwertes W1, der als 90 % des Hochfrequenzsignals RF festgelegt wurde, und eines unteren Schwellwertes W2, der 10 % des Hochfrequenzsignals RF entspricht, in einem Zeitbereich mit einer Zeitdauer ab 4 ms die Fehlerursache Fingerabdruck ermittelt.

Durch das Beziehen der Schwellwerte W1, W2 auf Spitzenwerte A, B des Hochfrequenzsignals RF wird eine Unabhängigkeit von der absoluten Spannung URF des Hochfrequenzsignals RF erreicht, die gerätespezifisch und von der Qualität der Reflexionsschicht der optischen Platte abhängig ist. Um das Meßsignal M in Bezug auf die ebenfalls aus dem Hochfrequenzsignal RF abgeleiteten Schwellwerte W1, W2 auswerten zu können, wurde deren Zeitkonstante im Vergleich zur Zeitkonstante des Meßsignals M wesentlich größer gewählt. Die Zeitkonstante der Schwellwerte W1, W2 Beträgt 200 ms und die des Meßsignals 2 ms.

Unabhängig vom Ausführungsweg des ersten Verfahrensschrittes wird dann mit der bereits erwähnten Anzeigevorrichtung 4 in einem zweiten Verfahrensschritt mindestens eine Fehlerursache signalisiert.

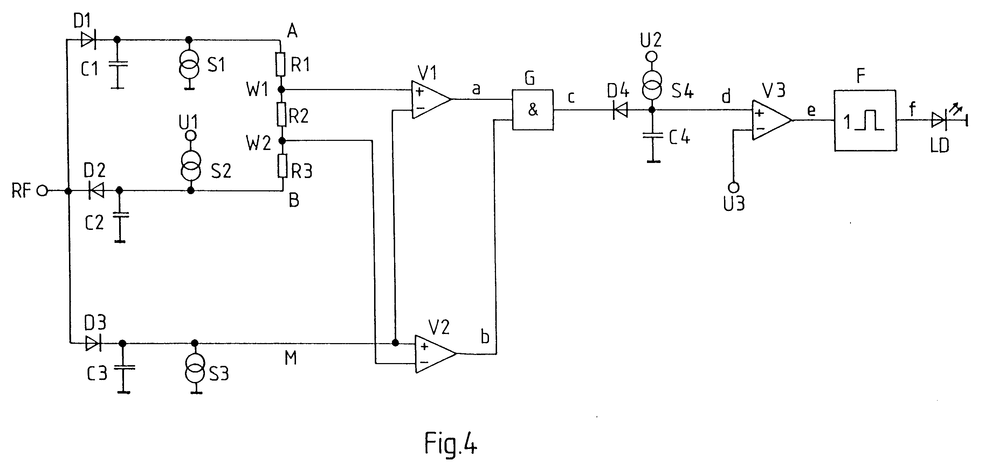

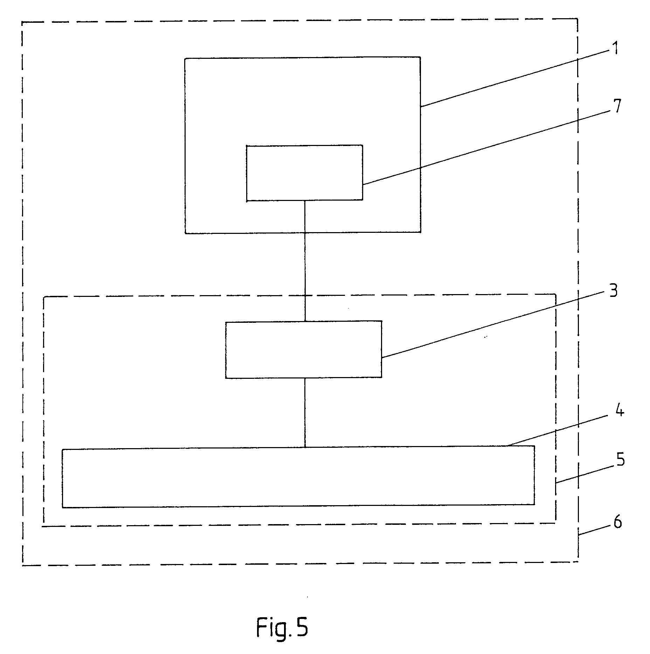

Zum Realisieren des vom Hochfrequenzsignal RF ausgehenden Ausführungsweges ist eine Fig. 4 entsprechende Anordnung vorgesehen, deren Blockschaltbild in Fig. 5 dargestellt ist. Dieses Blockschaltbild weist in Analogie zum in Fig. 6 angegebenen Blockschaltbild der Anordnung zur vom Fehlergrad ausgehenden Fehleranzeige eine Verarbeitungsschaltung 3 auf, an der eine in diesem Fall auf die Fehlerursache Fingerabdruck beschränkte Anzeigevorrichtung 4 angeschlossen ist. Die Verarbeitungsschaltung 3 ist gleichfalls mit dem Abspielgerät 1 verbunden und bei diesem Ausführungsweg am, das Hochfrequenzsignal RF von der optischen Platte detektierenden Abtaster 7 des Abspielgerätes 1 angeschlossen. Sie bildet mit der Anzeigevorrichtung 4 das Fehleranzeigegerät 5, dessen innerer Aufbau in der Fig. 4 entsprechenden Anordnung dargestellt ist. Diese besteht aus drei Spitzenwertgleichrichtern D1, C1, S1; D2, C2, S2; D3, C3, S3, die jeweils eine Diode D1, D2, D3, einen Kondensator C1, C2, C3 und eine Konstantstromquelle S1, S2, S3 aufweisen.

Die Konstantstromquellen S1, S2, S3 sind der Richtung der Dioden D1, D2, D3 entsprechend mit einer Masseleitung oder einer Versorgungsspannungsleitung U1 verbunden und die Kondensatoren C1, C2, C3 sind an der Masseleitung angeschlossen.

Die Dioden D1, D2 der zwei ersten Spitzenwertgleichrichter D1, C1, S1; D2, C2, S2 sind entgegengesetzt gerichtet und gemeinsam mit der Diode D3 des zweiten Spitzenwertgleichrichters D3, C3, S3 am das Hochfrequenzsignal RF bereitstellenden Abtaster 7 angeschossen. Die Richtung der Diode D3 des zweiten Spitzenwertgleichrichters D3, C3, S3, mit dem von dem Hochfrequenzsignal RF das Meßsignal M abgeleitet wird, entspricht der Phasenlage des Hochfrequenzsignals RF und am zweiten Spitzenwertgleichrichter D3, C3, S3 sind zwei erste Komparatoren V1, V2 angeschlossen, deren Vergleichseingänge mit dem Spannungsteiler R1, R2, R3 verbunden sind, der die ersten Spitzenwertgleichrichter D1, C1, S1; D2, C2, S3 miteinander verbindet und auf obere und untere Spitzenwerte A, B des Hochfrequenzsignal RF bezogene Schwellwerte W1, W2 bereitstellt, die 10 % beziehungsweise 90 % des Hochfrequenzsignals RF betragen. Mit den zwei ersten Komparatoren V1, V2 wird das Über- beziehungsweise Unterschreiten der Schwellwerte W1, W2 durch das Meßsignal M festgestellt. Die Ausgangssignale a, b der zwei ersten Komparatoren V1, V2 für den Fehlerursachen entsprechende Meßsignale M sind in Fig. 3 dargestellt. Durch Verknüpfen der Ausgangssignale a, b der zwei ersten Komparatoren V1, V2 über ein an den Komparatoren V1, V2 angeschlossenes Und-Gatter G wird ein Signal c bereitgestellt, wenn das Meßsignal M einen Wert innerhalb der Schwellwerte W1, W2 aufweist.

Da zusätzlich eine Zeitbewertung des Ausgangsignals M vorzunehmen ist, ist am Ausgang des Gatters G ein Zeitglied angeschlossen, das von einem Integrator mit nachgeschaltetem Komparator V3 gebildet wird. Der Integrator besteht aus einer Diode D4, einer Konstantstromquelle S4, die an einer Versorgungsspannung U2 angeschlossen ist, und einem Kondensator C4. Dem Signal c des Gatters G entsprechend wird ein Integrationssignal d, das ebenfalls in Fig. 3 dargestellt ist, bereitgestellt und dem Komparator V3 zum Vergleich mit der Referenzspannung U3 zugeführt, so daß am Ausgang des Komparators V3 durch die mit der Referenzspannung U 3 festgelegte Zeitdauer von 4 ms das Fehlersignal, welches die Fehlerursache Fingerabdruck kennzeichnet, abgegeben wird.

Um zu gewährleisten, daß das relativ kurzzeitig auftretende Fehlersignal e vom Betreiber des Abspielgerätes 1 wahrgenommen wird, ist am Komparator V3 ein Monoflop F zur Impulsverlängerung angeschlossen, dessen Anzeigesignal f ebenfalls in Fig. 3 dargestellt ist und einer Lichtemitterdiode LD zugeführt wird, die die Fehlerursache Fingerabdruck visuell anzeigt. Dieses, vom Hochfrequenzsignal RF ausgehende Fehleranzeigegerät 5, kann analog Zu einem vom Fehlergrad ausgehenden Fehleranzeigegerät 5, das ebenfalls aus einer Verarbeitungsschaltung 3 und einer Anzeigevorrichtung 4 besteht, den Figuren 5 und 6 entsprechend mit dem Abspielgerät 1 zu einer baulichen Einheit 6 zusammengefaßt sein.

**Patentansprüche**

1. Verfahren zum Signalisieren der Fehlerursache optisch abtastbarer Informationsträger beziehungsweise optischer Platten mit einem üblicherweise zur Wiedergabe der Information verwendeten Abspielgerät (1), dadurch gekennzeichnet, daß aus einer in benachbarten Spuren (k) eines Plattensektors auftretenden Fehlerrate (z) durch Vergleich mit vorgegebenen Grenzwerten und/oder aus einem von dem optischen Informationsträger mit dem Abspielgerät (1) detektierten Hochfrequenzsignal (RF) innerhalb eines oberen und eines unteren Schwellwertes (W1, W2) während eines Zeitbereiches jeweils in einem ersten Verfahrensschritt mindestens eine Fehlerursache ermittelt und in einem zweiten Verfahrensschritt signalisiert wird.

2. Verfahren nach Anspruch 1, dadurch gekennzeichnet, daß von einer Compact Disc mindestens eine Fehlerursache Fingerabdruck aus einer in benachbarten Spuren (k) eines Plattensektors auftretenden Fehlerrate (z) ermittelt wird, indem beim ersten Auftreten eines Fehlerpaketes (h), das beim Auftreten einer Fehlerrate (z) von vorzugsweise vier fehlerhaften Frame innerhalb einer 96 Frame entsprechenden Subcodeblockzeit (y) gebildet wird, verglichen wird, ob nach mindestens einem Umlauf im Bereich des Ortes des Auftretens erster Fehlerpakete (h) ebenfalls Fehlerpakete (h) auftreten und beim Auftreten von mehr als vorzugsweise drei Fehlerpaketen (h) in vorzugsweise fünf benachbarten Spuren (k) die Fehlerursache Fingerabdruck ermittelt ist, die in einem zweiten Verfahrensschritt signalisiert wird.

3. Verfahren nach Anspruch 1, dadurch gekennzeichnet, daß von einer Compact Disc mindestens eine Fehlerursache Fingerabdruck aus einem vom optischen Informationsträger mit dem Abspielgerät (1) dektierten Hochfrequenzsignal (RF) ein der Amplitude des Hochfrequenzsignals (RF) entsprechendes Meßsignal (M) in Form eines Hüllkurvensignals gebildet wird und beim Auftreten des Meßsignals (M) innerhalb eines oberen Schwellwertes (W1), der vorzugsweise einem Pegel von 90 % des Meßsignals (M) des ungestörten Hochfrequenzsignals (RF) entspricht, und eines unteren Schwellwertes (W2), der vorzugsweise einem Pegel von 10 % des Meßsignals (M) des ungestörten Hochfrequenzsignals (RF) entspricht, über einen vorzugsweise vier Millisekunden überschreitenden Zeitbereich die Fehlerursache Fingerabdruck ermittelt ist und in einem zweiten Verfahrensschritt signalisiert wird.

4. Verfahren nach einem der Ansprüche 1 bis 3, dadurch gekennzeichnet, daß mindestens eine Fehlerursache visuell und/oder akustisch über den unmittelbaren Zeitraum ihres Auftretens hinausgehend bis zum erneuten Einlegen einer optischen Platte oder eines Magazins optischer Platten signalisiert wird.

5. Anordnung zum Signalisieren der Fehlerursache optisch abtastbarer Informationsträger beziehungsweise optischer Platten mit einem üblicherweise zur Wiedergabe der Information verwendeten Abspielgerät (1), dadurch gekennzeichnet, daß eine Verarbeitungsschaltung (3) zur Verarbeitung Fehler eines optischen Informationsträgers repräsentierender Signale des Abspielgerätes (1) und zur Zuführung zu einer einer Anzeigevorrichtung (4) für mindestens eine Fehlerursache vorgesehen ist, die eine an einem Decoder (2) des Abspielgerätes (1) angeschlossene, fehlerhafte Frame in Beziehung zum Fehlerort setzende Recheneinheit und/oder eine Verarbeitungsschaltung (3) ist, die an einem Abtaster (7) des Abspielgerätes (1) zum Detektieren eines Informationssignale enthaltenden Hochfrequenzsignals (RF) angeschlossen ist und aus einer einen oberen Schwellwert (W1) und einen unteren Schwellwert (W2) des Hochfrequenzsignals (RF) bereitstellenden Schwellwertschaltung zum Ermitteln eines Meßsignals (M) des Hochfrequenzsignals (RF) innerhalb der Schwellwerte (W1, W2) und einem die Zeitdauer des Meßsignals (M) innerhalb der Schwellwerte (W1, W2) mit einem voreingestellten Wert vergleichenden Zeitglied besteht.

6. Anordnung nach Anspruch 5, dadurch gekennzeichnet, daß die Schwellwertschaltung aus zwei entgegengesetzt gerichteten ersten Spitzenwertgleichrichtern (D1, C1, S1; D2, C2, S2) besteht, die über einen Spannungsteiler (R1, R2, R3) miteinander verbunden sind, an dem zwei erste Komparatoren (V1, V2) angeschlossen sind, die eingangsseitig mit einem das Meßsignal (M) aus dein Hochfrequenzsignal (RF) bereitstellenden zweiten Spitzenwertgleichrichter (D3, C3, S3) und ausgangsseitig mit den Eingängen eines Gatters (G) verbunden sind.

7. Anordnung nach Anspruch 6, dadurch gekennzeichnet, daß die Spitzenwertgleichrichter (D1, C1, S1; D2, C2, S2; D3, C3, S3) jeweils aus einer Diode (D1, D2, D3), einem Kondensator (C1, C2, C3) und einer Konstantstromquelle (S1, S2, S3) bestehen und die ersten Spitzenwertgleichrichter (D1, C1, S1; D2, C2, S2) eine wesentlich größere Zeitkonstante gegenüber dem zweiten Spitzenwertgleichrichter (D3, C3, S3) aufweisen.

8. Anordnung nach Anspruch 7, dadurch gekennzeichnet, daß die Zeitkonstanten, insbesondere zum Ermitteln der Fehlerursache beim Abspielen mit erhöhter Geschwindigkeit, umschaltbar sind.

9. Anordnung nach Anspruch 5, dadurch gekennzeichnet daß das Zeitglied ein von einer Diode (D4), einem Kondensator (C4) und einer Konstantstromquelle (S4) gebildeter Integrator mit nachgeschaltetem Komparator (V3) ist und zur über den Zeitraum des Auftretens einer Fehlerursache hinausgehenden Anzeige ein Monoflop (F) und/oder ein rückstellbarer Speicher vorgesehen ist.

10. Anordnung nach Anspruch 5 dadurch gekennzeichnet, daß die Anzeigevorrichtung (4) eine visuell und/oder akustisch signalisierende Anzeigeeinrichtung ist, die reparable und/oder irreparable Fehlerursachen signalisiert und mit der Verarbeitungsschaltung (3) ein separates Fehleranzeigegerät (5) oder mit dem Abspielgerät (1) eine bauliche Einheit (6) bildet.

Fig.1

Fig.2

Fig.3

Fig.4

EP 0 517 099 A1

Fig. 5

Fig.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-2 851 822 (POLYGRAM GMBH.) <br> * das ganze Dokument * <br> --- | 1,2,4 | G11B27/36 <br> G11B20/18 <br> G11B27/34 <br> G11B7/00 |
| Y <br><br> A | EP-A-0 073 519 (SONY CORPORATION) <br> * das ganze Dokument * <br><br> --- | 1,2,4 <br><br> 5,10 | |
| Y,P | DE-A-4 029 220 (DEUTSCHE THOMSON-BRANDT GMBH.) <br> * das ganze Dokument * <br> --- | 1,2,4 | |
| A | EP-A-0 302 507 (OMRON TATEISI ELECTRONICS CO.) <br><br> * Spalte 2, Zeile 40 - Zeile 49 * <br> * Spalte 11, Zeile 49 - Spalte 13, Zeile 6; Abbildungen 6,8 * <br> --- | 1,3-5,9, 10 | |
| A | EP-A-0 144 831 (POLYGRAM GMBH.) <br> * das ganze Dokument * <br> --- | 1,4,5,10 | |
| A | PATENT ABSTRACTS OF JAPAN <br> vol. 8, no. 275 (P-321)(1712) 15. Dezember 1984 <br> & JP-A-59 142 756 ( SONY K.K. ) 16. August 1984 <br> * Zusammenfassung * <br> --- | 1,4,5,10 | RECHERCHIERTE SACHGEBIETE (Int. Cl.5) <br><br> G11B |
| A | PATENT ABSTRACTS OF JAPAN <br> vol. 13, no. 517 (P-962)20. November 1989 <br> & JP-A-1 209 344 ( SEIKO EPSON K.K. ) 23. August 1989 <br> * Zusammenfassung * <br> --- | 1,4,5,10 | |
| A | ELEKTOR ELECTRONICS. <br> Bd. 15, Nr. 171, Oktober 1989, CANTERBURY GB <br> Seiten 12 - 15; <br> GIFFARD: 'CD ERROR DETECTOR' <br> * das ganze Dokument * <br> --- | 1,4,5,10 | |

-/--

Der vorliegende Recherchenbericht wurde für alle Patentansprüche erstellt

| Recherchenort | Abschlußdatum der Recherche | Prüfer |
|---|---|---|
| DEN HAAG | 27 JULI 1992 | DAALMANS F.J. |

EPO FORM 1503 03.82 (P0403)

Europäisches
Patentamt

# EUROPÄISCHER RECHERCHENBERICHT

Nummer der Anmeldung

EP    92 10 8998
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | IBM TECHNICAL DISCLOSURE BULLETIN. Bd. 31, Nr. 8, Januar 1989, NEW YORK US Seiten 128 - 130; 'MULTI-THRESHOLD SURFACE ANALYSIS TESTER' siehe Seite 129,letztes Alinea - Seite 130,erstes Alinea --- | 1,5,8 | |
| A | US-A-4 287 587 (SIMSHAUSER ET AL.) * Abbildungen 4,5 * --- | 1,5-7 | |
| A | GB-A-2 137 799 (PIONEER ELECTRONIC CORP.) * das ganze Dokument * --- | 1,3-5,9, 10 | |
| A | PATENT ABSTRACTS OF JAPAN vol. 9, no. 289 (P-405)(2012) 15. November 1985 & JP-A-60 127 574 ( TOSHIBA K.K. ) 8. Juli 1985 * Zusammenfassung * ----- | 1,3,5,6, 9 | |
| | | | RECHERCHIERTE SACHGEBIETE (Int. Cl.5 ) |

Der vorliegende Recherchenbericht wurde für alle Patentansprüche erstellt

| Recherchenort | Abschlußdatum der Recherche | Prüfer |
|---|---|---|
| DEN HAAG | 27 JULI 1992 | DAALMANS F.J. |